# EUROPÄISCHE PATENTSCHRIFT

(11) **EP 0 514 725 B1**
(45) Veröffentlichungstag und Bekanntmachung des Hinweises auf die Patenterteilung: **19.04.1995**
(21) Anmeldenummer: 92107833.3
(22) Anmeldetag: 09.05.1992
(51) Int. Cl.: B29C 47/04

(54) **Verfahren zum Herstellen von Profilen**
Process for the manufacture of profiles
Procédé pour la fabrication de profils

(30) Priorität: 23.05.1991 DE 4116811
(43) Veröffentlichungstag der Anmeldung: 25.11.1992
(73) Patentinhaber: REHAU AG + Co, 95111 Rehau (DE)
(72) Erfinder:

(56) Entgegenhaltungen:
- DE-A- 2 035 578
- FR-A- 1 478 605
- US-A- 2 174 779
- US-A- 4 289 408
- PATENT ABSTRACTS OF JAPAN vol. 12, no. 45 (M-667)(2892) 10. Februar 1988

## Beschreibung

Die Erfindung betrifft ein Verfahren zum Herstellen von Profilen aus aufgeschmolzenen Polymermaterialien im Wege der Extrusion, wobei vor der Formgebung in den Hauptschmelzestrom in Strömungsrichtung der Schmelzestrom eines zweiten Polymermaterials eingetragen wird und wobei die vereinigten Schmelzeströme im formgebenden Extrusionswerkzeug zu einem Profilstrang geformt werden, welcher nach dem Abkühlen angelängt und abgenommen wird.

Aus der US-PS 21 74 779 ist eine Vorrichtung zur Extrusion verschiedenfarbiger Kunststoffströme bekannt. Die Vorrichtung besteht aus zwei synchron laufenden Extrusionsmaschinen, in denen unterschiedlich gefärbte Kunststoffmaterialien aufgeschmolzen und in einen Behälter gefördert werden. Aus diesem Zwischenbehälter werden die Schmelzeströme unter Formgebung ausgepresst, wobei die Schmelzeströme vor dem Auspressen miteinander vermengt oder unvermengt dem Auspressvorgang zugeführt werden können.

Mit der bekannten Vorrichtung lassen sich z.B. Stäbe erzeugen, in deren Querschnitt das andersfarbige Material exakt verteilt ist, z.B. Sternform aufweist. Von solchen Stäben lassen sich scheibenförmige Elemente z.B. für Dekorationszwecke abteilen. Der Nachteil einer solchen Vorrichtung ist darin zu sehen, daß für jede unterschiedliche Querschnittsabmessung an den Zwischenbehälter ein spezielles, dem gewünschten Querschnitt entsprechendes Spezialwerkzeug angeschlossen werden muß. Dies verteuert die Produktion solcher Teile erheblich.

Hier setzt die Erfindung ein, die es sich zur Aufgabe gestellt hat, ein Verfahren anzugeben, mit dem auf einfache Weise Extrusionsprofile hergestellt werden können, die im Querschnitt aus zwei unterschiedlichen Materialien ausgebildet sind, wobei das erste Polymermaterial im wesentlichen die im Endeinsatz sichtbaren Profilteile und das zweite Polymermaterial im wesentlichen die diese Profilteile verbindenden Mittelbereiche des Profiles bilden.

Erfindungsgemäß wird dazu vorgeschlagen, daß die räumliche Ausdehnung des zweiten Polymermaterials im Hauptschmelzestrom durch den Abstand des Einspritzpunktes vom Einlauf der vereinigten Schmelzeströme in das formgebende Extrusionswerkzeug und/oder von den Querschnittsabmessungen der lichten Einspritzöffnung für das zweite Polymermaterial geregelt wird.

Die Erfindung bringt den Vorteil, daß bei der Arbeit mit ein- und demselben Werkzeug durch Abstandsänderung des Einspritzpunktes die räumliche Ausdehnung des zweiten Polymermaterials im ersten Polymermaterial verschieden gestaltet werden kann. Diese Abstandregelung ist einfach durchzuführen, da lediglich der Einspritzpunkt für das zweite Polymermaterial in den gewünschten Grenzen verschoben werden muß.

Die räumliche Ausdehnung des zweiten Polymermaterials im Hauptschmelzestrom kann erfindungsgemäß aber auch durch Variation der Querschnittsabmessungen der lichten Einspritzöffnung für das zweite Polymermaterial geregelt werden. Erfindungsgemäß können beide Variationsmöglichkeiten kombiniert werden, was Vorteile wegen der begrenzten Thermostabilität der polymeren Schmelze hat. Auf diese Weise können Massenanhäufungen der Schmelzeströme entsprechend reduziert werden.

In allen drei möglichen Anwendungsfällen der vorliegenden Erfindung können vorhandene Profilwerkzeuge verwendet werden, d.h. es müssen keine speziellen Profilwerkzeuge für eine Zweitmaterialverarbeitung angefertigt werden. Vielmehr braucht für die Durchführung des erfindungsgemäßen Verfahrens nur ein Zuspritz-Zwischenteil vor den Einlauf in das formgebende Extrusionswerkzeug eingesetzt zu werden.

Vorteilhaft wird die geringste räumliche Ausdehnung des zweiten Polymermterials im Hauptschmelzestrom bei annähernd gleichzeitigem Einlaufen der vereinigten Schmelzeströme in das formgebende Extrusionswerkzeug und bei kleinem Querschnitt der lichten Einspritzöffnung für das zweite Polymermaterial erzielt.

In diesem Fall tendiert der Abstand des Einspritzpunktes vom Einlauf der vereinigten Schmelzeströme in das formgebende Extrusionswerkzeug gegen Null und der kleine Querschnitt der lichten Einspritzöffnung für das zweite Polymermaterial bewirkt in Kombination mit diesem geringstmöglichen Abstand die erfindungsgemäß steuerbar geringste räumliche Ausdehnung des zweiten Polymermaterials im Hauptschmelzestrom.

Dem gegenüber erscheint es bei dem Erfordernis großer räumlicher Ausdehnung des zweiten Schmelzestroms im Hauptschmelzestrom zweckmäßig, daß die größte räumliche Ausdehnung des zweiten Polymermaterials bei großem Abstand seines Einspritzpunktes vom Einlauf der Schmelzeströme in das formgebende Extrusionswerkzeug und bei großem Querschnitt der lichten Einspritzöffnung für das zweite Polymermaterial erzielbar ist.

Die Erfindung schafft die Möglichkeit, durch geringsten Aufwand im Rahmen der vorgeschilderten Bandbreite die Verteilung des zweiten Schmelzestroms im Hauptschmelzestrom zu regeln.

Beim Experimentieren mit dem Gegenstand der Erfindung hat sich herausgestellt, daß der Abstand des Einspritzpunktes des zweiten Polymermaterials vom Einlauf der vereinigten Schmelzeströme in das formgebende Extrusionswerkzeug maximal 150 mm betragen soll. Bei einer Vergrößerung dieses Maximalabstandes wird keine Verbesserung der räumlichen Ausdehnung des zweiten Polymermaterials im Hauptschmelzestrom mehr erzielt.

Ferner wurde ermittelt, daß der Querschnitt der lichten Einspritzöffnung für das zweite Polymermaterial maximal 70% der Querschnittsfläche des Strömungskanals für das erste Polymermaterial sein soll. Eine weitere Ausdehnung dieser Größenangabe ist nicht sinnvoll, da andernfalls die annähernde Umhüllung des zweiten Polymermaterials durch das erste Polymermaterial nicht mehr gewährleistet wäre.

Es hat sich schließlich als zweckmäßig herausgestellt, daß der Schmelzestrom des zweiten Polymermaterials zusätzlich über Beeinflussung des Querschnitts der Einspritzöffnung an die Erfordernisse des Profilquerschnitts angepaßt wird. Auf diese Weise lassen sich gezielt ganz bestimmte Bereiche des späteren Endprofils im Urformprozess durch das zweite Polymermaterial ersetzen, während andere Bereiche des späteren Endprofils ausschließlich von dem ersten Polymermaterial gebildet sind. Schließlich kann es noch vorteilhaft sein, die räumliche Ausdehnung des zweiten Polymermaterials innerhalb des ersten Polymermaterials zusätzlich zu den beschriebenen Schritten der Erfindung durch Änderungen der Drehzahlverhältnisse der Förderschnecken beider Schmelzeströme zu beeinflussen.

Die nachstehend beschriebenen Beispiele beschäftigen sich mit den erfindungsgemäßen Auswirkungen unterschiedlicher Querschnittsabmessungen der lichten Einspritzöffnung, unterschiedlichen Abständen des Einspritzpunktes und der Kombination beider Beeinflussungsmöglichkeiten. Es wird dabei davon ausgegangen, daß sowohl die Einspritzöffnung für das zweite Polymermaterial als auch die Einlauföffnung in das formgebende Extrusionswerkzeug einen kreisrunden Querschnitt aufweisen. Die Beispiele legen eine Einlauföffnung in das formgebende Extrusionswerkzeug mit einer Größenordnung von 100 mm Durchmesser zu Grunde. Alle Versuche wurden mit konstanter Drehzahl durchgeführt.

### Beispiel 1:

Konstante Querschnittsabmessung der lichten Einspritzöffnung mit verändertem Abstand des Einspritzpunktes.

Einlauföffnung 100 mm Durchmesser
Lichte Einspritzöffnung 45 mm
Abstand Einspritzpunkt vom formgebenden Extrusionswerkzeug 1 mm
Räumliche Ausdehnung des zweiten Polymermaterials: 45 mm
Lichte Einspritzöffnung 45 mm
Abstand Einspritzpunkt vom formgebenden Extrusionswerkzeug: 20 mm
Räumliche Ausdehnung des zweiten Polymermaterials: 52 mm Durchmesser
Lichte Einspritzöffnung 45 mm
Abstand Einspritzpunkt vom Extrusionswerkzeug: 100 mm
Räumliche Ausdehnung des zweiten Polymermaterials: 60 mm Durchmesser

### Beispiel 2:

Veränderter Durchmesser der Einspritzöffnung für das zweite Polymermaterial bei konstantem Abstand des Einspritzpunktes vom Einlauf der vereinigten Schmelzeströme in das formgebende Extrusionswerkzeug
Abstand Einspritzpunkt 1 mm
Lichte Einspritzöffnung 35 mm Durchmesser
Ausdehnung des zweiten Polymermaterials: 37 mm Durchmesser
Abstand Einspritzpunkt 1 mm
Lichte Einspritzöffnung 40 mm Durchmesser
Räumliche Ausdehnung des zweiten Polymermaterials: 40 mm Durchmesser
Abstand Einspritzpunkt 1 mm
Lichte Einspritzöffnung 45 mm Durchmesser
Ausdehnung des zweiten Polymermaterials 45 mm Durchmesser
Abstand Einspritzpunkt 1 mm
Lichte Einspritzöffnung: 50 mm Durchmesser
Räumliche Ausdehnung des zweiten Polymermaterials: 48 mm Durchmesser

### Beispiel 3:

Veränderung lichte Einspritzöffnung und Abstand Einspritzpunkt
Abstand Einspritzpunkt 1 mm
Lichte Einspritzöffnung: 45 mm Durchmesser
Räumliche Ausdehnung zweites Polymermaterial: 45 mm Durchmesser
Abstand Einspritzpunkt 20 mm
Lichte Einspritzöffnung 55 mm Durchmesser
Räumliche Ausdehnung zweites Polymermaterial 60 mm Durchmesser
Neben den in den Beispielen geschilderten kreisrunden Durchmessern des formgebenden Extrusionswerkzeugs und der lichten Einspritzöffnung für das zweite Polymermaterial lassen sich für das erfindungsgemäße Verfahren auch andere Öffnungsquerschnitte verwenden. So kann die lichte Einspritzöffnung für das zweite Polymermaterial als Beispiel oval, rechteckig, L- bzw. U-förmig usw. ausgelegt sein. Auch kann die lichte Einspritzöffnung für das zweite Polymermaterial beispielsweise im Fließkanal exzentrisch versetzt angeordnet sein, um bestimmte Bereiche des späteren Endprofils gezielt mit dem zweiten Polymermaterial anzuströmen.

Mit dem erfindungsgemäßen Verfahren lassen sich beispielsweise unterschiedlich gefärbte Polymermaterialien zu Profilen verarbeiten, wobei das zweite Polymermaterial im Endprofil bestimmte Profilbereiche des ersten Polymermaterials miteinander verbindet. Es lassen sich mit diesem Verfahren auch Polymermaterialien unterschiedlicher Eigenschaften verarbeiten, wobei Voraussetzung dafür ist, daß die unterschiedlichen Polymermaterialien untereinander verträglich sind und beim Extrusionsvorgang eine innige Verbindung miteinander eingehen. Schließlich können mit diesem Verfahren auch recycelte Polymermaterialien mit jungfräulichem Polymermaterial verbunden werden.

So wurde beispielsweise bei der Erarbeitung der Erfindung ein Hohlprofil extrudiert, dessen mittlerer Bereich nahezu vollständig aus dem zweiten Polymermaterial gebildet war, während die im Endeinsatz sichtbaren Profilteile dieses Hohlprofils aus jungfräulichem Polymermaterial bestanden. Als Hohlprofil wurde hierfür ein Hohlkammerprofil gewählt, wie es im Fensterbau als sogeanntes Z-Profil zum Einsatz kommt.

Aus diesem Profil wurde ein Fenster gefertigt, dessen dekorative Sichtbereiche durchgehend weiß eingefärbt waren. Es gab bei dem in das Mauerwerk eines Gebäudes eingebauten und mit einer Glasfüllung versehenen Fenster keinerlei Hinweise darauf, daß der die dekorativen Sichtbereiche verbindende Hohlkammerteil des zur Herstellung dieses Fensters verwendeten Hohlkammerprofils aus recyceltem Polymermaterial bestand.

Der die Sichtbereiche verbindende Profilteil kann nach dem erfindungsgemäßen Verfahren von einer dünnen Schicht des jungfräulichen Polymermaterials vollständig abgedeckt sein. Dann wird erst durch die Anfertigung eines Querschnittes durch das Profil deutlich, daß der Mittelbereich des Profils von dem zweiten Polymermaterial gebildet ist.

Der die Sichtbereiche verbindende Profilteil kann aber auch ausschließlich aus dem zweiten Polymermaterial gebildet sein, so daß vor dem Einbau des Fensterprofils nach außen hin deutlich wird, daß dieses Profil aus zwei Materialien gefertigt wurde, ohne daß ein Profilquerschnitt hergestellt werden muß.

Das erfindungsgemäße Verfahren kann damit vorteilhaft zur Wiederverarbeitung von recycelten Polymermaterialien in Kombination mit jungfräulichen Polymermaterialien eingesetzt werden. Dadurch kann das optimale Erscheinungsbild des jungfräulichen Polymermaterials bei solchen Profilen nach außen zur Sichtseite hin hervortreten, während die weniger augenfälligen Bestandteile solcher Profile im Querschnitt aus minderwertigeren Polymermaterialien oder recyceltem Material gebildet werden können.

## Patentansprüche

1. Verfahren zum Herstellen von Profilen aus aufgeschmolzenen Polymermaterialien im Wege der Extrusion, wobei vor der Formgebung in den Hauptschmelzestrom in Strömungsrichtung der Schmelzestrom eines zweiten Polymermaterials eingetragen wird, und wobei die vereinigten Schmelzeströme im formgebenden Extrusionswerkzeug zu einem Profilstrang geformt werden, welcher nach dem Abkühlen abgelängt und abgenommen wird, dadurch gekennzeichnet, daß die räumliche Ausdehnung des zweiten Polymermaterials im Hauptschmelzestrom durch den Abstand des Einspritzpunktes vom Einlauf der vereinigten Schmelzeströme in das formgebende Extrusionswerkzeug und/oder von den Querschnittsabmessungen der lichten Einspritzöffnung für das zweite Polymermaterial geregelt wird.

2. Verfahren nach Anspruch 1, dadurch gekennzeichnet, daß die geringste räumliche Ausdehnung des zweiten Polymermaterials bei annähernd gleichzeitigem Einlaufen der Schmelzeströme in das formgebende Extrusionswerkzeug und bei kleinem Querschnitt der lichten Einspritzöffnung für das zweite Polymermaterial erzielt wird.

3. Verfahren nach Anspruch 1, dadurch gekennzeichnet, daß die größte räumliche Ausdehnung des zweiten Polymermaterials bei großem Abstand seines Einspritzpunktes vom Einlauf der Schmelzeströme in das formgebende Extrusionswerkzeug und bei großem Querschnitt der lichten Einspritzöffnung für das zweite Polymermaterial erzielt wird.

4. Verfahren nach Ansprüchen 1, 2 und 3, dadurch gekennzeichnet, daß der Abstand des Einspritzpunktes des zweiten Polymermaterials vom Einlauf der vereinigten Schmelzeströme in das formgebende Extrusionswerkzeug maximal 150 mm ist.

5. Verfahren nach Ansprüchen 1, 2 und 3, dadurch gekennzeichnet, daß der Querschnitt der lichten Einspritzöffnung für das zweite Polymermaterial maximal 70% der Querschnittsfläche des Strömungskanals für das erste Polymermaterial ist.

6. Verfahren nach Ansprüchen 1 und 5, dadurch gekennzeichnet, daß der Schmelzestrom des zweiten Polymermaterials zusätzlich über Beeinflusung des Querschnitts der Einspritzöffnung an die Erfordernisse des Endprofils angepaßt wird.

7. Verfahren nach einem oder mehreren der vorangegangenen Ansprüche, dadurch gekennzeichnet, daß die räumliche Ausdehnung des zweiten Polymermaterials innerhalb des ersten Polymermaterials zusätzlich durch Änderungen der Drehzahlverhältnisse der Förderschnecken der Schmelzeströme beeinflußt wird.

## Claims

1. Method for manufacturing profiles from molten polymer materials by way of extrusion in which, prior to shaping, the melt stream of a second polymer material is introduced into the main melt stream in the direction of flow and whereby the united melt streams are formed within the extrusion die into a profile extrudate which, after cooling, is cut to length and removed, characterised by the fact that the physical expansion of the second polymer material in the main melt stream is governed by the distance of the point of injection from where the united melt streams are admitted into the shaping extrusion die and/or by the cross sectional dimensions of the clear injection aperture for the second polymer material.

2. Method as described in claim 1, characterised by the fact that the smallest physical expansion of the second polymer material is achieved with the melt streams being admitted into the shaping extrusion die at virtually one and the same time and with a small cross section of the clear injection aperture for the second polymer material.

3. Method as described in claim 1, characterised by the fact that the maximum physical expansion of the second polymer material is achieved with its point of injection being spaced a long way from where the melt streams are admitted into the shaping extrusion die and with a large cross section of the clear injection aperture for the second polymer material.

4. Method as described in claims 1, 2 and 3, characterised by the fact that the distance of the point of injection of the second polymer material is a maximum of 150 mm from where the united melt streams are admitted into the shaping extrusion die.

5. Method as described in claims 1, 2 and 3, characterised by the fact that the cross section of the clear injection aperture for the second polymer material accounts for a maximum of 70% of the cross sectional area of the flow channel for the first polymer material.

6. Method as described in claims 1 and 5, characterised by the fact that by influencing the cross section of the injection aperture the melt stream of the second polymer material is additionally adapted to the requirements of the final profile.

7. Method as described in one or more of the claims set out above, characterised by the fact that the physical expansion of the second polymer material within the first polymer material is additionally influenced by changing the speed ratios of the melt stream screws.

## Revendications

1. Procédé de fabrication par extrusion de profilés en matériaux polymères fondus, dans lequel on intègre, avant le formage, dans le sens de l'écoulement, le flux d'un second matériau polymère fondu dans le flux principal et dans lequel les deux flux de coulée réunis sont formés dans l'outil d'extrusion en une barre de profilé qui est alors tronçonnée et retirée après refroidissement, caractérisé par le fait que l'expansion du second matériau polymère dans le flux de coulée principal est déterminée par la distance du point d'injection par rapport à l'alimentation des flux de coulée réunis dans l'outil d'extrusion et/ou par les dimensions de la section de l'ouverture d'injection libre du second matériau polymère.

2. Procédé selon la revendication 1, caractérisé par le fait que la plus faible expansion du second matériau polymère est obtenue par une alimentation approximativement simultanée des flux de coulée dans l'outil d'extrusion et avec une faible section de l'ouverture d'injection libre du second matériau polymère.

3. Procédé selon la revendication 1, caractérisé par le fait que la plus grande expansion du second matériau polymère est obtenue avec une grande distance de son point d'injection par rapport à l'alimentation des flux de coulée dans l'outil d'extrusion et avec une grande section de l'ouverture d'injection libre du second matériau polymère.

4. Procédé selon les revendications 1, 2 et 3, caractérisé par le fait que le point d'injection du second matériau polymère est distant au maximum de 150 mm de l'alimentation des flux de coulée réunis dans l'outil d'extrusion.

5. Procédé selon les revendications 1, 2 et 3, caractérisé par le fait que la section de l'ouverture d'injection libre du second polymère représente au maximum 70 % de la surface de section du canal d'écoulement du premier matériau polymère.

6. Procédé selon les revendications 1 et 5, caractérisé par le fait que le flux de coulée du second matériau polymère est en outre adapté aux spécifications du profilé final en jouant sur la section de l'ouverture d'injection.

7. Procédé selon l'une ou plusieurs des revendications précédentes, caractérisé par le fait que l'expansion du second matériau polymère est en outre influencée au sein du premier matériau polymère par des modifications des rapports de vitesse des vis transporteuses des flux de coulée.
